# EUROPÄISCHE PATENTSCHRIFT

(11) **EP 0 416 207 B1**
(45) Veröffentlichungstag und Bekanntmachung des Hinweises auf die Patenterteilung: **27.09.1995**
(21) Anmeldenummer: 90108613.2
(22) Anmeldetag: 08.05.1990
(51) Int. Cl.: G02B 6/44

(54) **Lichtwellenleiterkabel**
Optical cable
Câble optique

(30) Priorität: 02.09.1989 DE 3929215
(43) Veröffentlichungstag der Anmeldung: 13.03.1991
(73) Patentinhaber: KABEL RHEYDT Aktiengesellschaft, D-41179 Mönchengladbach (DE)
(72) Erfinder: Diehl, Bernhard, D-4050 Mönchengladbach 3 (DE); Delâge, Peter, D-4053 Jüchen 5 (DE); Hög, Georg, D-4050 Mönchengladbach 2 (DE); Zamzow, Peter, D-4630 Bochum (DE)
(74) Vertreter: Mende, Eberhard, Dipl.-Ing.

(56) Entgegenhaltungen:
- EP-A- 0 321 787
- DE-U- 9 003 135
- US-A- 4 038 489

## Beschreibung

Ein Lichtwellenleiterkabel hat bekanntlich in der Mitte ein Zentralelement, um das die einzelnen Lichtwellenleiteradern in Gestalt einer Lage verseilt angeordnet sind. Jede Lichtwellenleiterader weist eine oder mehrere Glasfasern als Lichtwellenleiter auf. Die Gesamtheit der Lichtwellenleiteradern ist von einer Hülle umgeben, die durch Aufwickeln hergestellt werden kann. Die Hohlräume zwischen den Lichtwellenleiteradern können durch Füllmassen wie Petrolaten ausgefüllt sein. Um die Hülle für die Lichtwellenleiteradern sind im allgemeinen Zugentlastungselemente angeordnet, die in der Regel verseilt sind. Die Zugentlastungselemente sind mit einem die Zugentlastungselemente umgebenden Band oder direkt mit einem Außenmantel verklebt.

Bei der Montage von Lichtwellenleiterkabeln müssen die Lichtwellenleiter freigelegt werden, um die Lichtwellenleiteradern anschließen zu können. Die Lichtwellenleiteradern müssen manchmal sogar in einer Länge von mehreren Metern freigelegt und damit von den umgebenden Elementen des Lichtwellenleiterkabels befreit werden.

Zu diesem Zweck ist es bereits bekannt (US-A-4 038 489), Reißfäden unterhalb einer zugfesten Lage anzuordnen, der über der zugfesten Lage befindliche Außenmantel scheint auf diese Weise nur schwer auftrennbar. Wenn es weiterhin bekannt ist (EP 0 321 787-A2), bei um ein Zentralelement angeordneten optischen Fasern ein Element als Reißfaden auszubilden, dann geht es hierbei darum, nach Auftrennen der allen Elementen gemeinsamen Hülle das zunächst im Querschnitt kreisförmige optische Kabelelement in eine Bändchenform zu überführen.

Ausgehend von diesem Stand der Technik liegt der Erfindung die Aufgabe zugrunde, ein Lichtwellenleiterkabel anzugeben, welches in einfacher Weise das Freilegen der Lichtwellenleiteradern (zu Montagezwecken oder zu Reparaturzwecken) ermöglicht.

Diese Aufgabe wird erfindungsgemäß durch ein Lichtwellenleiterkabel mit den Merkmalen des Anspruchs 1 gelöst.

Die Erfindung wird im folgenden an Ausführungsbeispielen erläutert.

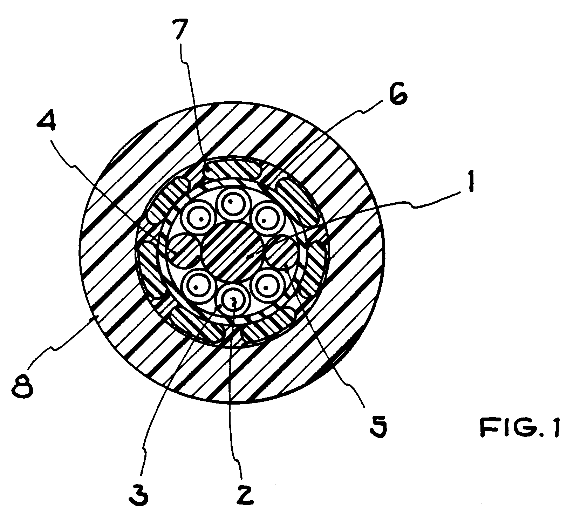

Die Figur 1 zeigt den Querschnitt eines Lichtwellenleiterkabels nach der Erfindung. Das Lichtwellenleiterkabel der Figur 1 besteht aus einem Zentralelement 1, um das Lichtwellenleiteradern angeordnet sind. Die Lichtwellenleiteradern bestehen gemäß der Figur 1 aus einem Lichtwellenleiter 2 und einer Umhüllung 3. In der Hülle 3 befindet sich im allgemeinen eine Füllmasse, in die der Lichtwellenleiter 2 eingebettet ist. Um das Zentralelement 1 sind bei der Ausführungsform der Figur 1 nicht nur Lichtwellenleiteradern angeordnet, sondern auch die beiden Reißfäden 4 und 5. Die Reißfäden (4, 5) haben im allgemeinen einen kleineren Querschnitt als die Lichtwellenleiteradern, obwohl sie in den Figuren der Einfachheit halber mit gleichem Querschnitt dargestellt sind. Die Reißfäden bestehen im allgemeinen aus verzwirnten Fäden.

Wie die Figur 1 weiter zeigt, sind die Lichtwellenleiteradern und die Reißfäden von einer Seelenbewicklung 6 umgeben. Die Seelenbewicklung besteht beispielswweise aus aufgewickelten Papier- oder Kunststoffbändern oder zur Erzielung besonderer Längswasserdichtigkeit aus quellfähigen Bändern. Die Seelenbewicklung 6 ist gemäß der Figur 1 von Zugentlastungselementen 7 umgeben, die beispielsweise aus Glas oder Aramidgarn bestehen. Auf die Zugentlastungselemente 7 folgt der Außenmantel 8 aus Kunststoff. Die Zugentlastungselemente 7 sind im allgemeinen mit dem Außenmantel 8 verklebt.

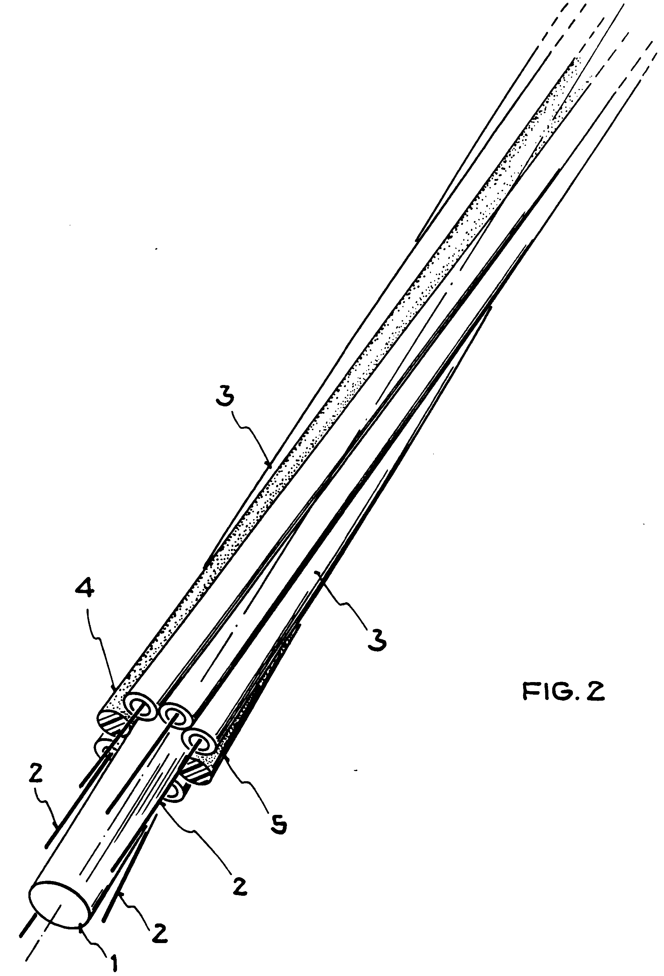

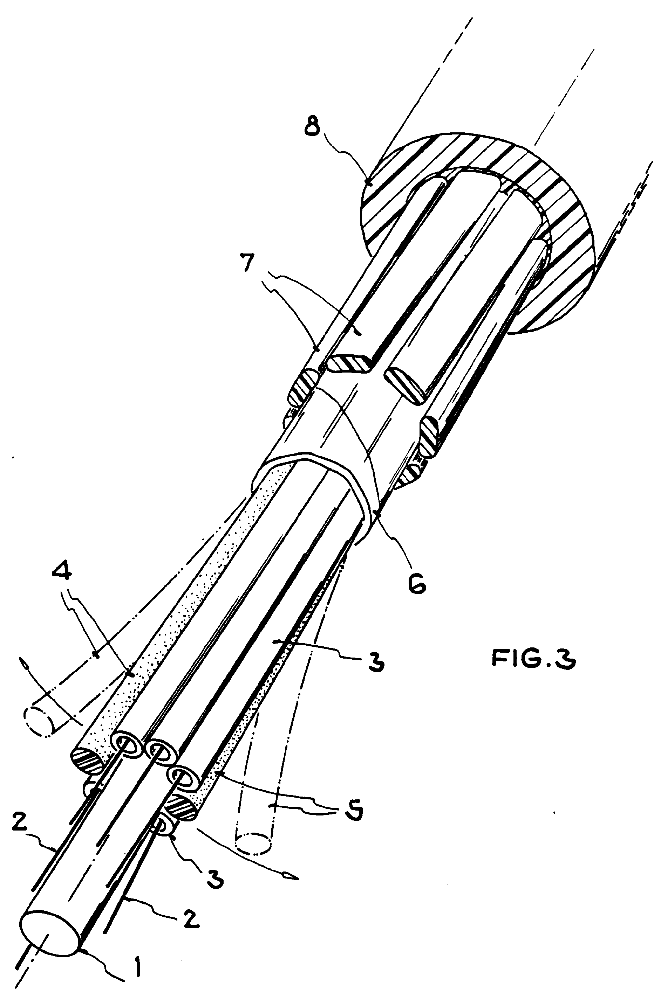

Wie die Figur 2 erkennen läßt, sind bei der Anordnung der Figur 1 die Reißfäden 4 und 5 erfindungsgemäß verseilt, und zwar in der gleichen Lage wie die Lichtwellenleiteradern. Die Figur 3 zeigt nochmals das Kabel der Figur 1 in perspektivischer Darstellung und im aufgeschnittenen Zustand.

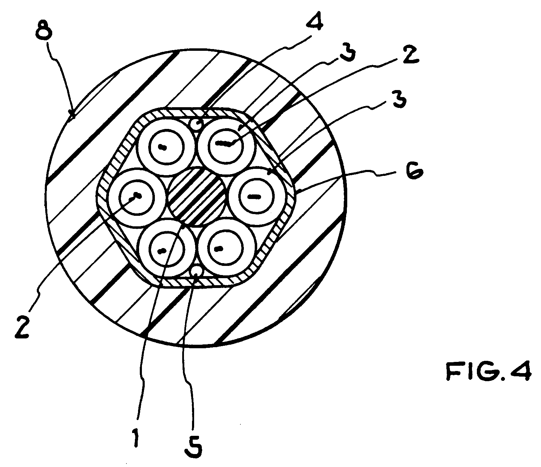

Die Figur 4 zeigt ein zweites Ausführungsbeispiel der Erfindung im Schnitt. Das Lichtwellenleiterkabel der Figur 4 besteht aus einem Zentralelement 1 und Lichtwellenleiteradern, die das Zentralelement 1 umgeben. Die Lichtwellenleiteradern bestehen im Ausführungsbeispiel der Figur 4 aus mehreren Lichtwellenleitern 2, die von einer Hülle 3 umgeben sind. Die Lichtwellenleiteradern sind von einer Seelenbewicklung 6 umgeben, die wie im ersten Ausführungsbeispiel aus Bändern besteht. Bei dem Lichtwellenleiterkabel der Figur 4 sind ebenfalls Reißfäden (4, 5 ) vorgesehen, die im zweiten Ausführungsbeispiel nicht in der Lage der Lichtwellenleiter angeordnet sind, sondern in den Zwickelräumen 9, die zwischen den Lichtwellenleiteradern und der Seelenbewicklung 6 vorhanden sind. Die Seelenbewicklung 6 ist von einem Außenmantel 8 umgeben.

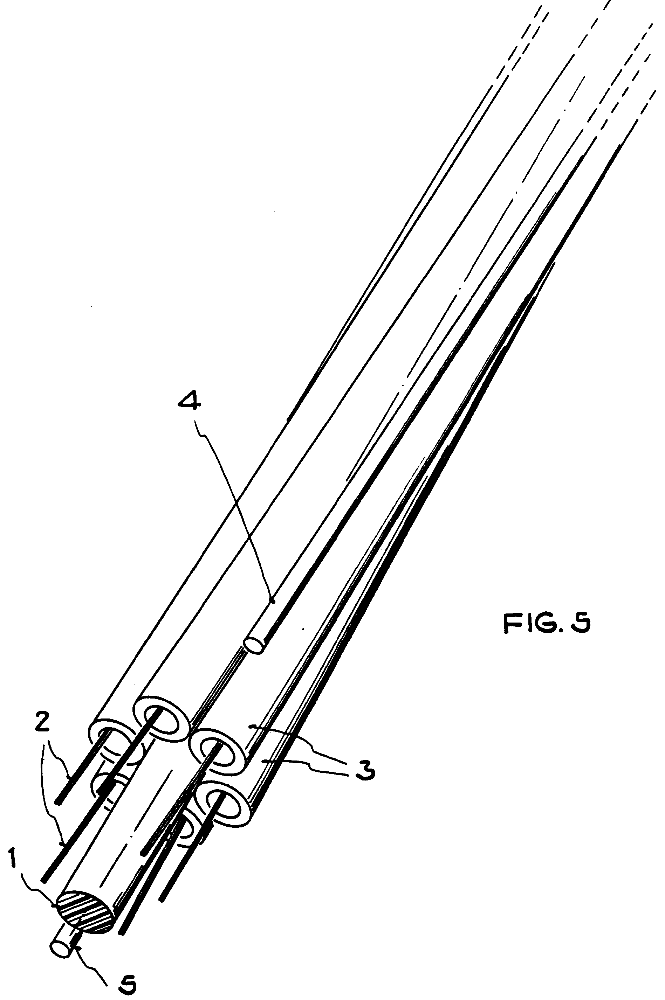

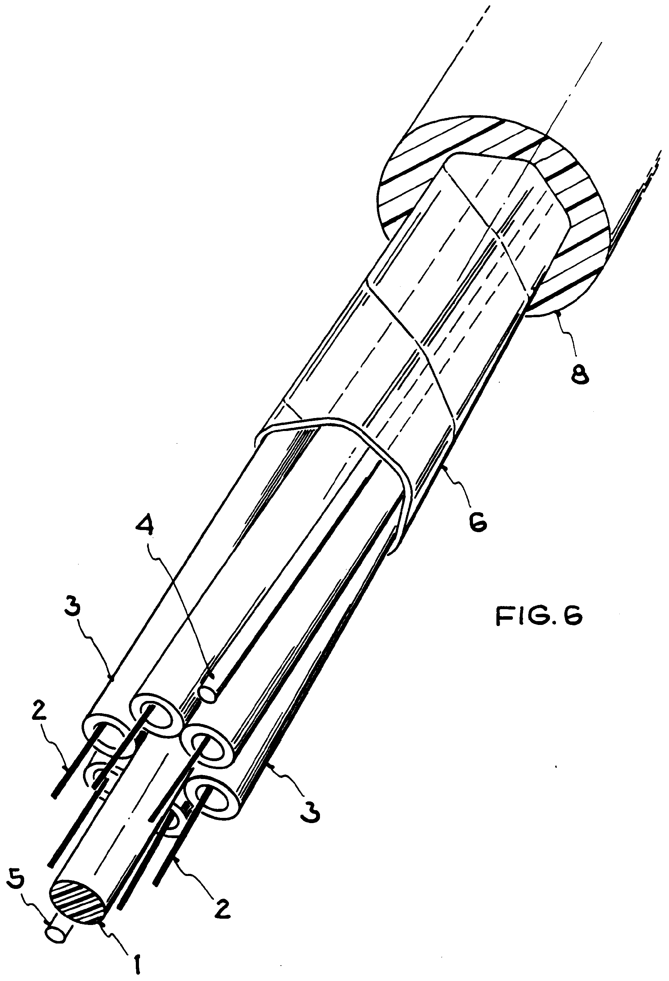

Wie die Figur 5 zeigt, sind die Reißfäden 4 und 5 verseilt angeordnet. Die Figur 6 zeigt das Lichtwellenleiterkabel der Figur 4 in perspektivischer Darstellung.

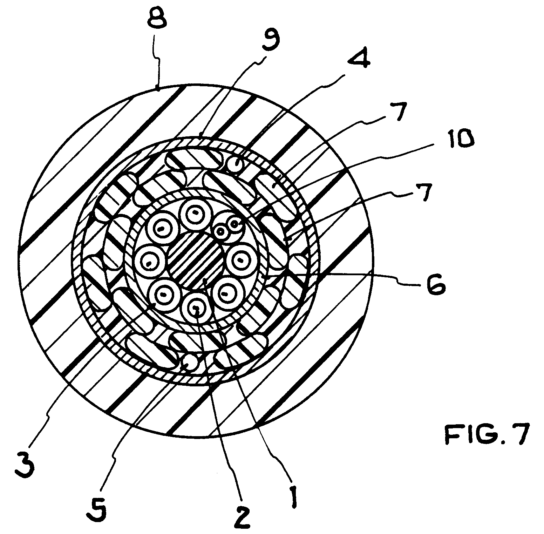

Die Figur 7 zeigt ein drittes Ausführungsbeispiel der Erfindung in Schnittdarstellung. Das Lichtwellenleiterkabel der Figur 7 besteht aus einem Zentralelement 1, um das wiederum Lichtwellenleiteradern angeordnet sind.

Die Lichtwellenleiteradern bestehen beim Lichtwellenleiterkabel der Figur 7 aus zwei Lichtwellenleitern 2, die von einer Hülle 3 umgeben sind. Außer von Lichtwellenleiteradern ist beim Ausführungsbeispiel der Figur 7 das Zentralelement 1 auch noch von zwei Kupferadern (10) umgeben, die miteinander verseilt sind. Die Lichtwellenleiteradern und die Kupferadern sind von einer Seelenbewicklung 6 umgeben, die wie in den anderen Ausführungsbeispielen aus Bändern besteht. Die Seelenbewicklung 6 ist von Zugentlastungselementen 7 umgeben, die in einer oder mehreren Lagen angeordnet sein können. Im Ausführungsbeispiel der Figur 7 sind zwei Lagen Zugentlastungselemente 7 vorhanden. Die Zugentlastungselemente der beiden Lagen sind gegeneinander versetzt. Die Reißfäden 4 und 5 befinden sich im Ausführungsbeispiel der Figur 7 zwischen Zugentlastungselementen 7. Im Ausführungsbeispiel der Figur 7 sind die Reißfäden in der äußeren Lage der beiden Lagen der Zugentlastungselemente angeordnet. Die Reißfäden sind dagegen verseilt mit den Zugentlastungselementen in der äußeren Lage angeordnet, um beim Auftrennen des Kabels die mit dem Kabelmantel verklebte äußere Lage der Zugentlastungselemente zusammen mit dem Mantel vollständig vom Innenteil des Kabels zu lösen.

Beim Ausführungsbeispiel der Figur 7 sind die Zugentlastungselemente 7 von einer metallischen Hülle 11 umgeben, die beispielsweise aus einem längslaufenden Band besteht. Das Band besteht beispielsweise aus Aluminium oder Stahl.

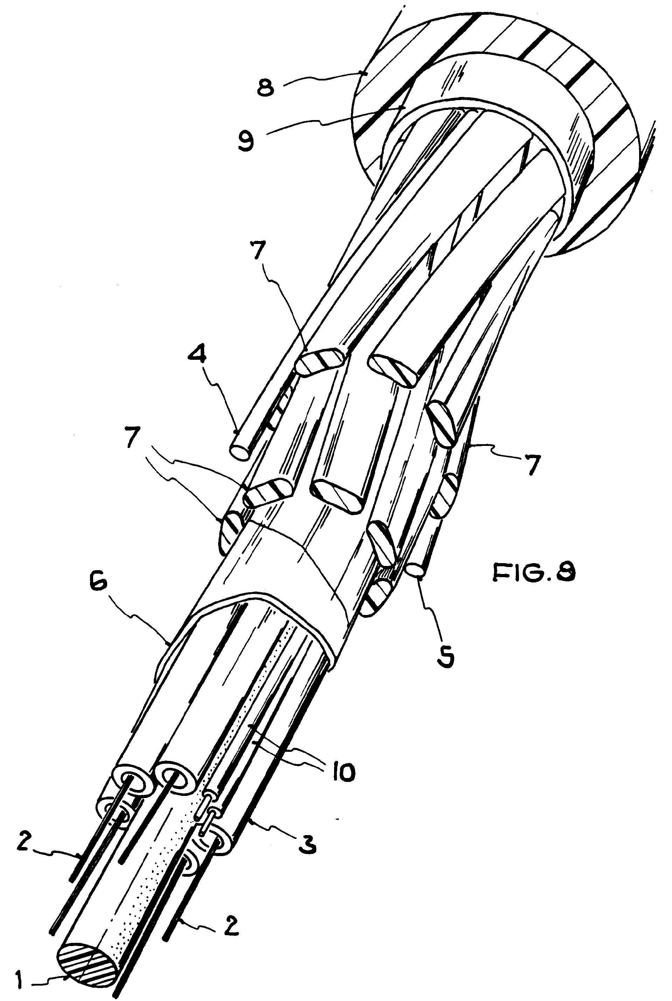

Die Fig. 8 zeigt eine perspektivische Darstellung des Lichtwellenleiterkabels der Fig. 7 im aufgeschnittenen Zustand. Hierbei sind die einander gegenüberliegenden Reißfäden 4 und 5 in der außenliegenden Lage der Zugentlastungselemente 7 angeordnet und mit diesen verseilt.

Wird an den Reißfäden 4 und 5 gerissen, so werden in sämtlichen Fällen die Lichtwellenleiteradern in einfacher Weise freigelegt. Dadurch wird eine Kabelmontage ermöglicht.

## Patentansprüche

1. Lichtwellenleiterkabel mit einem Zentralelement und einem Außenmantel, sowie einer oder mehreren Lagen von Lichtwellenleiteradern und Zugentlastungselementen zwischen Zentralelement und Außenmantel, sowie Reißfäden zur Längsauftrennung des Kabels, dadurch gekennzeichnet, daß die Reißfäden mit den Lichtwellenleiteradern oder Zugentlastungselementen verseilt sind, wobei in der jeweiligen Verseillage zwei Reißfäden einander gegenüberliegend angeordnet sind.

2. Lichtwellenleiterkabel nach Anspruch 1 mit einer mehrlagigen Ausführung der Zugentlastungselemente dadurch gekennzeichnet, daß die mit den Reißfäden verseilten Zugentlastungselemente in der äußeren Lage angeordnet sind.

## Claims

1. Optical fibre cable having a central element and an outer sheath, as well as one or more layers of optical fibre strands and strain-relief elements between central element and outer sheath, and rip threads for longitudinal separation of the cable, characterized in that the rip threads are stranded with the optical fibre strands or strain-relief elements, two rip threads being arranged lying opposite each other in the respective stranding layer.

2. Optical fibre cable according to Claim 1, having a multilayer design of the strain-relief elements, characterized in that the strain-relief elements which are stranded with the rip threads are arranged in the outer layer.

## Revendications

1. Câble de guides d'ondes lumineuses avec un élément central et une enveloppe extérieure, ainsi qu'avec une ou plusieurs couches de veines de guides d'ondes lumineuses et d'éléments de décharge de traction entre un élément central et un élément extérieur, ainsi qu'avec des fils de déchirure servant à une séparation dans le sens de la longueur du câble, câble de guides d'ondes lumineuses, caractérisé en ce que les fils de déchirure sont câblés avec les veines de guides d'ondes lumineuses ou d'éléments de décharge de traction , deux fils de déchirure étant disposés en regard l'un de l'autre dans la couche correspondante de câblage.

2. Câble de guides d'ondes lumineuses selon la revendication 1 avec une réalisation multicouche des éléments de décharge de traction, caractérisé en ce que les éléments de décharge de traction, câblés avec les fils de déchirure, sont disposés dans la couche extérieure.
